# EUROPEAN PATENT SPECIFICATION

(11) **EP 4 348 073 B1**
(45) Date of publication and mention of the grant of the patent: **09.07.2025**
(21) Application number: 22729710.8
(22) Date of filing: 20.05.2022
(51) Int. Cl.: F16D 65/00, B60T 7/00, B60T 13/00, B60T 17/08, F16D 55/226, F16D 65/18

(54) **DISC BRAKE FOR A COMMERCIAL VEHICLE WITH CENTERING DEVICE**
SCHEIBENBREMSE FÜR EIN NUTZFAHRZEUG MIT ZENTRIERVORRICHTUNG
FREIN À DISQUE POUR UN VÉHICULE UTILITAIRE AVEC DISPOSITIF DE CENTRAGE

(30) Priority: 27.05.2021 EP 21176309; 01.09.2021 EP 21194326
(43) Date of publication of application: 10.04.2024
(73) Proprietor: KNORR-BREMSE Systeme für Nutzfahrzeuge GmbH, 80809 München (DE)
(72) Inventor: DEROUAULT, Sylvain, 14100 Hermival les Vaux (FR); BOEHLER, Vincent, 14100 Saint Desir (FR)
(86) International application number: PCT/EP2022/063781
(87) International publication number: WO 2022/248368

(56) References cited:
- EP-A1- 3 236 099
- DE-A1- 102012 016 712
- DE-A1- 102013 208 917

## Description

The invention relates to a disc brake for a commercial vehicle according to the preamble of claim 1, a commercial vehicle with at least one such disc brake according to claim 14, a method for attaching or fastening a pneumatic brake cylinder to a brake caliper of a disc brake for a commercial vehicle according to claims 15 and 17, and a method for releasing or detaching a brake cylinder from a brake caliper of a disc brake according to claims 16 and 18.

A disc brake is known from DE 10 2012 016 712 A1. The fastening device there has bolts provided with an external thread, which are fastened in the brake cylinder, project away from the brake cylinder and into screw eyes of the brake caliper, where they are locked by means of nuts. The disadvantage of this type of fastening device is that when the brake cylinder is detached from the brake caliper, for example for repair purposes, the brake cylinder must be pulled away from the brake caliper in the direction of the bolts, at least over the length of the bolts, so that the bolts of the brake cylinder can be pulled out of the screw eyes of the brake caliper. However, this requires a certain amount of space within the wheel housing of the commercial vehicle in which the disc brake is located, which is often not available. Furthermore, the disassembly of the brake cylinder from the brake caliper then takes a relatively long time.

For this reason, in the as yet unpublished European patent application no. 21176309.9, a disc brake for a commercial vehicle was proposed, with a pneumatic brake cylinder, a brake disc, a brake caliper, a brake application device and with brake pads, wherein the brake caliper engages over the brake disc and the brake application device, which can be actuated by the brake cylinder and by means of which the brake pads can be pressed against the brake disc on both sides during braking, is arranged in the brake caliper, wherein an extendable and retractable piston rod of the brake cylinder is in engagement with the application device and the brake caliper is detachably fastened to the brake cylinder by means of a fastening device, wherein the fastening device comprises at least one screw with a screw head, a screw shank and an external thread formed on the screw shank and at least one bore formed in or on the brake cylinder with an internal thread, into which bore the screw shank with the external thread is screwed, wherein the screw head is locked on a counter surface of the brake caliper. The counter surface can be formed, for example, by a screw eye on the brake caliper.

The screw head of the at least one screw therefore points towards the brake caliper and is locked there in a brake caliper through-bore, in particular in a screw eye, while the screw shank points towards the brake cylinder and is screwed there in or with the bore.

A screw connection is therefore provided between the brake caliper and the brake cylinder, whereby, in contrast to DE 10 2012 016 712 A1 mentioned at the beginning, the conditions are reversed and the brake caliper is not provided with at least one protruding bolt, but with at least one bore into which a screw is screwed with its screw head countered, for example, at the screw eye or at the edge of a through bore of the brake caliper. This means that the brake cylinder does not have to be removed any further from the brake caliper than is necessary to disengage the piston rod of the brake cylinder from the brake caliper brake application device. This advantageously reduces the space required for disassembly within the wheel housing of the commercial vehicle.

However, aligning the brake cylinder with respect to the brake caliper when mounting the disc brake in such a way that the screw eyes on the brake caliper are aligned with the assigned holes in or on the brake cylinder so that the screws can be inserted through the screw eyes and screwed into the holes is sometimes difficult due to the relatively heavy weight of the brake caliper (8-9 kg).

EP 3 236 099 A1 discloses a brake disc device, where the brake cylinder has a mounting plate from which screws shanks of screws protrude into the brake caliper. DE 10 2013 208 917 A1 discloses a centering device for a disc brake, wherein the disc brake has a movable brake shoe for pressing a brake disc between the brake shoe and a counter brake shoe of the disc brake and a fixed support element for movably receiving the brake shoe and the counter brake shoe, with a centering element which can be connected to the support element in a rotationally fixed manner and in an axially fixed manner with respect to an axis of rotation of the brake disc.

It is the object of the present invention to provide a disc brake for a commercial vehicle which is easier to mount and dismount. Furthermore, it is also intended to provide a commercial vehicle with such a disc brake as well as methods for attaching a pneumatic brake cylinder to a brake caliper of a disc brake for a commercial vehicle as well as a method for detaching the brake cylinder from the brake caliper of the disc brake.

This object is solved according to the invention by the features of claims 1, 14, 15, 16, 17 and 18.

### Disclosure of the invention

The invention is based on a disc brake for a commercial vehicle with a brake cylinder, a brake disc, a brake caliper, a brake application device and with brake pads, wherein the brake caliper engages over the brake disc and the brake application device, which can be actuated by the brake cylinder, is arranged in the brake caliper, by means of which the brake pads can be pressed against the brake disc on both sides during braking, an extendable and retractable piston rod of the brake cylinder being in engagement with the brake application device, and the brake caliper being detachably fastened to the brake cylinder by means of a fastening device.

The retractable piston rod of the brake cylinder engages with the brake application device, for example, in that the brake application device has a receptacle for one end of the piston rod, in which this end engages.

The brake caliper is detachably attached to the brake cylinder by means of a fastening device, meaning that the brake caliper and the brake cylinder can be dismantled from each other without destroying them by loosening the fastening device.

It is further provided that the fastening device comprises at least one screw with a screw head, a screw shank and an external thread formed on the screw shank and at least one bore formed in or on the brake cylinder with an internal thread, into which the screw shank with the external thread is screwed, the screw head being locked on a counter surface of the brake caliper. The counter surface can be formed, for example, by a screw eye on the brake caliper.

The screw head of the at least one screw therefore points towards the brake caliper and is locked there in a through hole, in particular in a screw eye, while the screw shank points towards the brake cylinder and is screwed there in the hole.

The bore can be formed in a wall of the brake cylinder or in a separate body which is detachably or non-detachably connected to the wall of the brake cylinder.

According to the invention, a centering device is then provided which is designed and intended to center the pneumatic brake cylinder and the brake caliper against each other independently of the screw connection of the at least one screw to the at least one bore.

Counter-centering means that at least one degree of freedom of a possible relative movement between the brake cylinder and the brake caliper is prevented by the centering device. This at least one degree of freedom can be a degree of translational or rotational freedom.

The independence of the centering device from the screwing of the at least one screw with the at least one bore means that centering by the centering device is in particular (already) present or has come about before the at least one screw is or is screwed with the at least one bore. The at least one screw or the at least one screw connection or screw connection is therefore in particular not a component of the centering device.

The centering device has the advantage that the relatively heavy brake cylinder can be centered on the brake caliper before the at least one screw is screwed into the bore, which simplifies the assembly of the brake cylinder on the brake caliper.

Preferably, the pneumatic brake cylinder can be a combined service and spring brake cylinder, or a separate service brake cylinder.

The at least one bore can also be formed in or on a brake cylinder wall of the brake cylinder.

According to a further development, the brake caliper can have at least one caliper through-hole in a caliper wall of the brake caliper, through which the screw shaft projects and on which the counter surface is formed.

At least one through-hole of the brake caliper can be designed as a screw eye of the brake caliper.

The fastening device can also comprise at least
a) two screws, a first screw and a second screw, each having a screw head, a screw shank and an external thread formed on the screw shank, and
b) two bores formed in or on the brake cylinder, a first bore and a second bore, each with an internal thread, and
c) two caliper through bores, a first caliper through bore having a first counter surface and a second caliper through bore having a second counter surface, wherein
d) the first screw is screwed into the first hole and locked on the first counter surface and the second screw is screwed into the second hole and locked on the second counter surface.

Also, the at least one bore may be formed in a separate body which is detachably or non-detachably connected to the brake cylinder wall of the brake cylinder.

In particular, the separate body may be located inside the brake cylinder and the screw shank may extend through a brake cylinder through bore in the wall of the brake cylinder and be screwed into the bore separate from the body.

In particular, the separate body may be welded to the brake cylinder wall.

Particularly preferably, the centering device can comprise
a) at least one sleeve attached to the brake cylinder and projecting outwardly away from the brake cylinder, and the brake caliper through bore, the sleeve being inserted into the brake caliper through bore, or
b) at least one sleeve attached to the brake caliper and projecting outwardly away from the brake caliper and the brake cylinder through bore, the sleeve being inserted into the brake cylinder through bore.

There can be a fit, in particular a clearance fit, between the sleeve and the brake caliper through-hole, so that the brake cylinder is centered on the brake caliper by this easily joinable and detachable fit.

If the sleeve is then designed in such a way that the screw shank can protrude through the sleeve and be screwed into the bore, this results in an advantageous double function of the sleeve in that it forms a component of the centering device on the one hand and of the fastening device on the other.

Also, the sleeve can be connected to the separate body mentioned above and protrude through the brake cylinder through-hole, while also being integral with the separate body.

A ring washer can also be arranged between the screw head of at least one screw and the counter surface, which enables the screw connection to be set.

According to a further development, the brake caliper can have a recess in the area of the screw head in such a way that, seen in a direction perpendicular to a screw axis of the screw, a screwdriving tool can be applied to the screw head and then the screw can be screwed by means of the screwdriving tool. The screw head can have any attachment surface for the screwdriving tool, for example an outer polygonal profile, in particular an outer hexagonal profile for an open-end spanner, or an inner polygonal profile, for example for an Allen key.

Preferably, the at least one screw and the piston rod of the brake cylinder are also arranged parallel to each other.

According to a further development, the pneumatic brake cylinder can be a combined pneumatic service and spring brake cylinder or a separate pneumatic service brake cylinder. In both cases, the piston rod can then be a service brake piston rod of the service brake cylinder.

The invention also relates to a commercial vehicle with at least one disc brake described above.

In addition, the invention also relates to a method of attaching the brake cylinder to the brake caliper of the disc brake described above by means of a centering device described above, comprising at least the following steps:
a) inserting the sleeve attached to the brake cylinder and projecting away from the brake cylinder into the brake caliper through hole, or
b) inserting the sleeve attached to the caliper and projecting away from the caliper into the brake cylinder through bore, and
c) screwing the at least one screw into the at least one hole.

Furthermore, the invention relates to a method for attaching a pneumatic brake cylinder to a brake caliper of a disc brake, in particular described above, for a commercial vehicle, which comprises the brake cylinder, a brake disc, the brake caliper, a brake application device and brake pads, wherein the brake caliper engages over the brake disc and the brake application device, which can be actuated by the brake cylinder, is arranged in the brake caliper, by means of which the brake pads are pressed against the brake disc on both sides during braking, an extendable and retractable piston rod of the brake cylinder being in engagement with the brake application device, and the brake caliper being detachably fastened to the brake cylinder by means of a fastening device, wherein the fastening device comprises at least two screws, a first screw and a second screw, each having a screw head, a screw shank and an external thread formed on the screw shank, and at least two bores, a first bore and a second bore, each having an internal thread, formed in or on the brake cylinder, and at least two caliper through bores, a first caliper through bore with a first counter surface and a second caliper through bore with a second counter surface, by means of at least one centering pin, comprising at least the following steps, where in particular, the steps are executed one after the other in time:
a1) guiding the centering pin into the first caliper through-bore and into the first bore such that the caliper and the brake cylinder are thereby centered against each other, and
a2) inserting the second screw into the second caliper through hole and screwing the second screw into the second hole until the second screw head is locked against the second counter surface, and
a3) removing the centering pin from the first hole and the first caliper through hole, and
a4) Inserting the first screw into the first caliper through hole and screw the first screw into the first hole until the first screw head is locked against the first counter surface.

As an alternative to steps a1) to a4), the following steps can be carried out, where in particular, the steps are executed one after the other in time:
b1) guiding the centering pin into the second caliper through-bore and into the second bore such that the caliper and the brake cylinder are thereby centered against each other, and
b2) inserting the first screw into the first caliper through hole and screwing the first screw into the first hole until the first screw head is locked against the first counter surface, and
b3) removing the centering pin from the second bore and the second caliper through bore, and
b4) Inserting the second screw into the second caliper through hole and screw the second screw into the second hole until the second screw head is locked against the second counter surface.

Countering the screw head on the first counter surface or on the second counter surface on the second counter surface according to step a2) or step b2) preferably means that the screw in question is screwed with a torque which initially only generates a small normal force between the screw head and the counter surface in question, which still allows the brake cylinder to be (slightly) twisted around the screw axis of the screw already screwed into the hole in question relative to the brake caliper, to (slightly) rotate the brake cylinder relative to the brake caliper about the screw axis of the screw already screwed into the relevant bore, so that after removal of the centering pin according to step a3) or step b3) alignment can be established between the respective other bore and the respective other brake caliper through-bore in order to be able to carry out step a4) or step b4). Before or after carrying out step a4) or step b4), the screw concerned is then preferably retightened with a higher torque then provided for the screw connection.

Countering the screw head on the first counter surface or on the second counter surface according to step a4) or step b4) preferably means that the screw in question is tightened immediately with the torque provided for the screw connection.

A method for releasing a pneumatic brake cylinder from a brake caliper of a disc brake for a commercial vehicle, which comprises the brake cylinder, a brake disc, the brake caliper, a brake application device and brake linings, wherein the brake caliper engages over the brake disc and the brake application device, which can be actuated by the brake cylinder, is arranged in the brake caliper, by means of which, during braking, the brake linings are pressed against the brake disc on both sides, an extendable and retractable piston rod of the brake cylinder being in engagement with the brake application device, and the brake caliper being releasably fastened to the brake cylinder by means of a fastening device, wherein the fastening device comprises at least two screws, a first screw and a second screw, each having a screw head, a screw shank and an external thread formed on the screw shank, and at least two bores formed in or on the brake cylinder, a first bore and a second bore each having an internal thread, and at least two caliper through bores, a first caliper through bore having a first counter surface and a second caliper through bore having a second counter surface, where the first screw projects through the first caliper through bore and is screwed into the first bore and where the second screw projects through the second caliper through bore and is screwed into the second bore (by means of at least one centering pin, comprising at least the following steps, where in particular, the steps are executed one after the other in time:
a1) removing the first screw from the first bore and from the first caliper through bore, and
a2) guiding the centering pin into the first brake caliper through bore and into the first bore in such a way that the brake caliper and the brake cylinder are thereby centered against each other, and
a3) removing the second screw from the second bore and from the second caliper through bore, and
a4) removing the pneumatic brake cylinder from the brake caliper by moving the pneumatic brake cylinder in a direction which is parallel to an axis of the centering pin, and
a5) removing the centering pin from the first brake caliper through bore and from the first bore.

As an alternative to steps a1) to a5), the following steps can be carried out, where in particular, these steps are executed one after the other in time:
b1) removing the second screw from the second bore and from the second caliper through bore, and
b2) guiding the centering pin into the second brake caliper through bore and into the second bore in such a way that the brake caliper and the brake cylinder are thereby centered against each other, and
b3) removing the first screw from the first bore and from the first caliper through bore, and
b4) removing the pneumatic brake cylinder from the brake caliper by moving the pneumatic brake cylinder in a direction which is parallel to an axis of the centering pin, and
b5) removing the centering pin from the second brake caliper through bore and from the second bore.

A further method of releasing the brake cylinder from the disc brake caliper comprises at least the following steps:
a) applying a screwdriving tool to the at least one screw head,
b) unscrewing the at least one screw from the hole,
c) removing the at least one screw,
d) disengaging the piston rod of the brake cylinder from the brake application device in the brake caliper,
e) removing the brake cylinder from the disc brake caliper.

For a disassembly of the brake cylinder from the brake caliper, after loosening and removing the at least one screw, the brake cylinder therefore only has to be removed from the brake caliper as seen in particular in the direction of a longitudinal axis of the at least one screw until the piston rod of the brake cylinder is out of engagement with the brake application device in the brake caliper.

### Drawings

An embodiment of the invention is shown below in the drawing and explained in more detail in the following description. The drawings show in
- Fig. 1: a perspective partial sectional view of a disc brake according to a preferred embodiment with a pneumatic brake cylinder attached to the brake caliper by means of a detachable fastening device;
- Fig. 2: an enlarged perspective section of Fig. 1 showing the fastening device and a version of a centering device;
- Fig. 3: a perspective inside view of the brake cylinder of the disc brake of Fig. 1;
- Fig. 4: an enlarged section of the interior view of Fig. 3;
- Fig. 5: a side view of the disc brake of Fig. 1 in an assembled state;
- Fig. 6: an enlarged perspective section of a further embodiment of a disc brake;
- Fig. 7: a perspective view of a disc brake caliper of Fig. 6 according to a step of a method for attaching/detaching a pneumatic brake cylinder of the disc brake to or from the caliper by means of a centering pin;
- Fig. 8: a perspective view of the brake caliper and the pneumatic brake cylinder according to a further step of the method;
- Fig. 9: a perspective view of the brake caliper and the pneumatic brake cylinder according to a further step of the method;
- Fig. 10: a perspective view of the brake caliper and the pneumatic brake cylinder according to a further step of the method;
- Fig. 11: a perspective view of the brake caliper and the pneumatic brake cylinder according to a further step of the method;
- Fig. 12: a perspective view of the brake caliper and the pneumatic brake cylinder according to a further step of the method;
- Fig. 13: a side view of the disc brake of Fig. 1 in a condition during disassembly of the brake cylinder from the brake caliper.

### Description of the design example

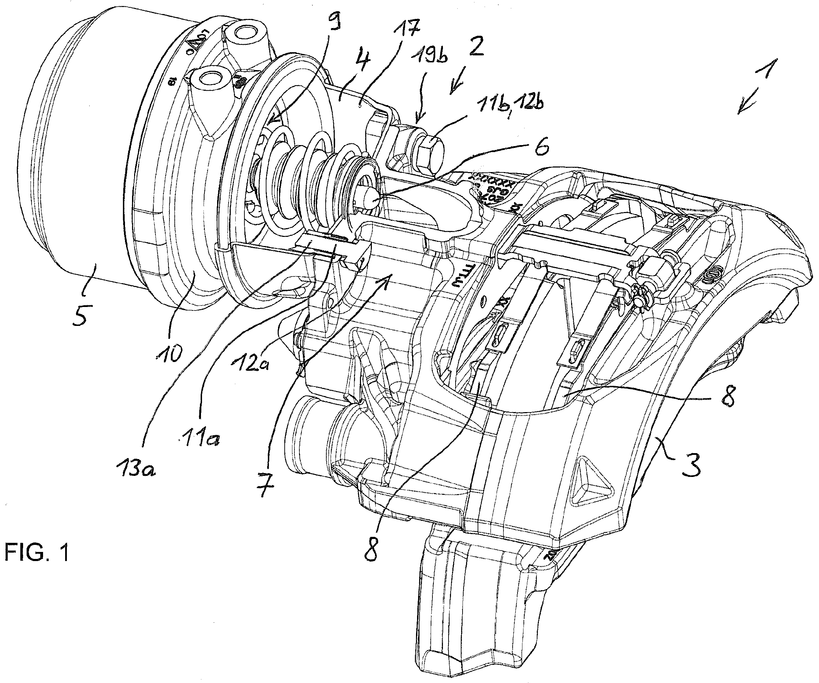

**Fig. 1** shows a perspective partial sectional view of a disc brake 1 of a commercial vehicle according to a preferred embodiment, with a pneumatic brake cylinder 4 detachably fastened to a brake caliper 3 by means of a detachable fastening device 2. The pneumatic brake cylinder 4 is here, for example, a pneumatic service brake cylinder which forms a structural unit with a spring brake cylinder 5, which then represents a so-called combination cylinder of pneumatic service brake cylinder 4 and pneumatic spring brake cylinder 5.

The disc brake 1 comprises the pneumatic service brake cylinder 4, a brake disc not shown here, the brake caliper 3, which engages over the brake disc, and an application device 7 not shown in detail here, which is arranged in the brake caliper 3 and can be actuated by a piston rod 6 of the service brake cylinder 4, as well as brake pads 8.

More precisely, the piston rod 6 is connected to a brake piston 9 of the service brake cylinder 4, which is actuated by venting and bleeding a brake chamber 10 of the service brake cylinder 4, wherein the piston rod 6 moves out of the service brake cylinder 4 during venting and moves into the service brake cylinder 4 during bleeding, for example. One end of the piston rod 6 engages with a receptacle of a brake application device 7 in such a way that the retraction or extension movement of the piston rod 6 is transmitted to a mechanism of the brake application device 7, whereupon the latter presses the brake pads 8 against the brake disc on both sides when the brake is applied (ventilation of the brake chamber 10) and releases them from the brake disc when the brake is released (ventilation of the brake chamber 10).

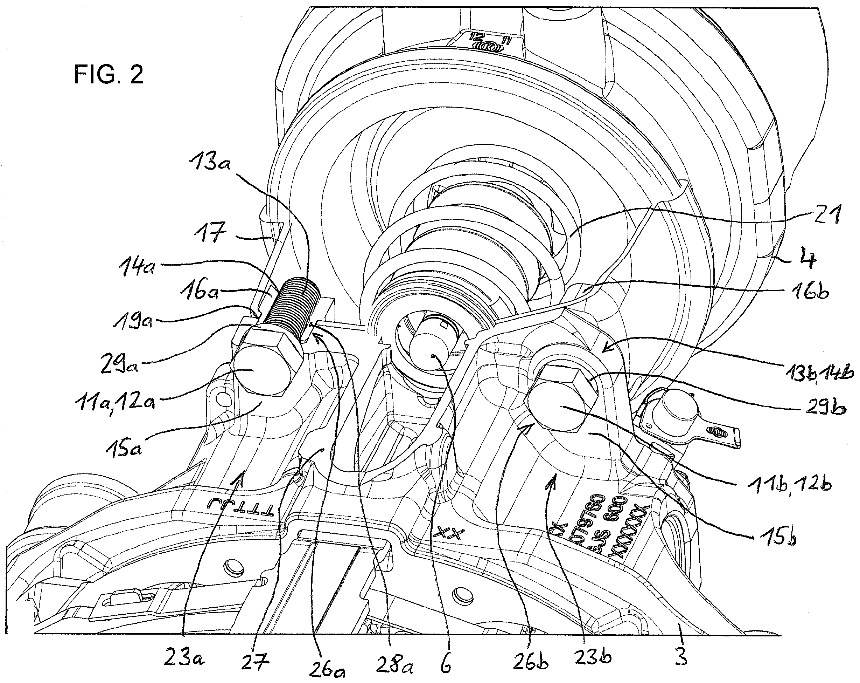

The fastening device 2, by means of which the brake caliper 3 and the service brake cylinder 4 can be released from one another, comprises several screw connections, here for example two screw connections. A first screw connection comprises a first screw 11a with a first screw head 12a, a first screw shank 13a and an external thread formed on the first screw shank 13a and at least one first bore 14a formed here, for example, in the service brake cylinder 4 with an internal thread, into which the first screw shank 13a is screwed with the external thread, as is visible in particular in the partial sectional view of **Fig. 2****.**

A second screw connection parallel to the first screw connection is designed analogously to the first screw connection according to **Fig. 2** and comprises a second screw 11b with a second screw head 12b, a second screw shank 13b and an external thread formed on the second screw shank 13b and at least one second bore 14b formed in the service brake cylinder 4 with an internal thread, into which the second screw shank 13b is screwed with the external thread.

The first screw shank 13a protrudes through a first brake caliper through-bore 26a, wherein the first screw head 12a locks against a first counter surface 15a of the brake caliper 3, which is formed by an edge of the first brake caliper through-bore 26a, which is executed here, for example, in a first screw eye of the brake caliper 3. Similarly, the second screw shank 13b protrudes through a second caliper through-hole 26b, wherein the second screw head 12b is locked to a second counter surface 15b of the caliper 3, which is formed by an edge of the second caliper through-hole 26b, which is made here, for example, in a second screw eye of the caliper 3. Preferably, the screws 11a, 11b of the screw connections and the piston rod 6 of the service brake cylinder 4 are arranged parallel to each other.

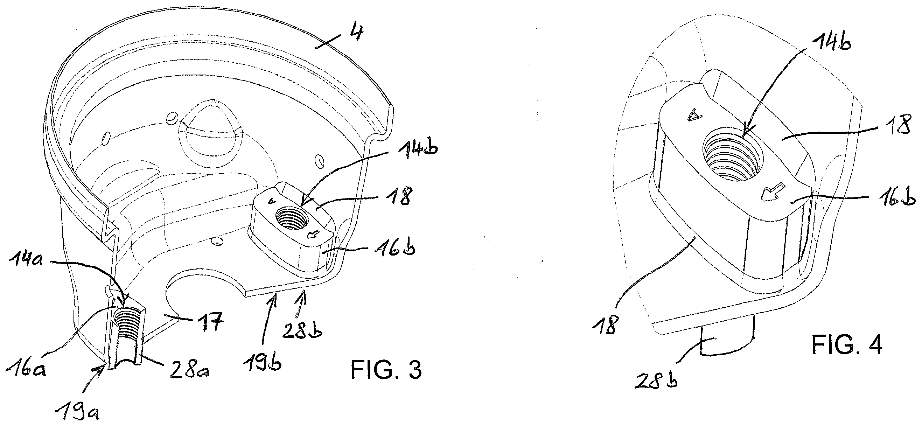

The first bore 14a and the second bore 14b are formed here, for example, as blind bores or through bores in here, for example, separate first and second bodies 16a and 16b in each case, which are arranged in the interior of the service brake cylinder 4, as **Fig. 3** shows, and are welded in particular to a brake cylinder wall 17 of the service brake cylinder 4 here, for example, by means of circumferential weld seams 18, as **Fig. 4** shows.

The first and second bores 14a, 14b are then provided on their radially inner circumferential surface with internal threads into which the external threads of the first and second screw shafts 13a and 13b are screwed. As **Fig. 2** and **Fig. 3** show, the first body 16a has a first sleeve 28a as an extension of the first body 16a, for example in one piece here, wherein the first sleeve 28a extends through a first through-bore 19a in the brake cylinder wall 17 of the brake cylinder 4 and extends out of this a short distance into the first brake caliper through-bore 26a. Otherwise, the first body 16a is, for example, cuboidal in shape, with at least one of its outer surfaces being configured to engage the inner surface of the brake cylinder wall 17 of the service brake cylinder 4. The first screw shank 13a of the first screw 11a then extends through the first through bore 19a in the brake cylinder wall 17 of the brake cylinder 4 and through the first sleeve 28a to be screwed to the first bore 14a of the first body 16a.

In an analogous manner, the second body 16b has a second sleeve 28b as, for example, an integral extension of the second body 16b in this case, the second sleeve 28a extending through a second through-bore 19b in the brake cylinder wall 17 of the brake cylinder 4 and extending therefrom a short distance into the second brake caliper through-bore 26b. Otherwise, the second body 16b is also cuboidal in shape, for example, with at least one of its outer surfaces being configured to engage the inner surface of the brake cylinder wall 17 of the service brake cylinder 4. The second screw shank 13b of the second screw 11b then extends through the second through hole 19b in the brake cylinder wall 17 of the brake cylinder 4 and through the second sleeve 28b to be screwed to the second hole 14b of the second body 16b.

In this respect, the first and second sleeves 28a and 28b, together with the first and second caliper through-holes 26a, 26b, form a centering device integrated here, for example, into the service brake cylinder 4 of the disc brake 1. As can be easily imagined from **Fig. 2****,** in a state of the disc brake in which the service brake cylinder 4 has not yet been fastened to the brake caliper by the two screw connections, the two sleeves 28a, 28b protrude a little from the two through holes 19a and 19b with a protruding section 29a, 29b. This allows the respective protruding portion 29a, 29b of the two sleeves 19a, 19b to enter the associated first and second caliper through holes 26a. 26b when the service brake cylinder 4 is applied to the brake caliper 3, 26b and thereby center the service brake cylinder 4 and the brake caliper 3 against each other before the first and second bolts 11a and 11b are inserted into the first and second brake caliper through holes 26a, 26b and the first and second sleeves 28a and 28b to make the two bolted connections. In particular, there is a fit between the protruding parts 29a, 29b of the two sleeves 19a, 19b as inner parts and the two brake caliper through holes 26a, 26b in each case, in particular a clearance fit in each case.

According to a further embodiment not shown here, the centering device could also form an integral part of the brake caliper 3 in that first and second sleeves protrude, for example, from the first and second brake caliper through holes 26a, 26b a little way out and in the direction of the service brake cylinder 4 in order to be able to be received there, for example, in the first and second through holes 19a and 19b and/or in the two bodies 16a, 16b in each case in the form of a fit.

In particular, the first and second bodies 16a, 16b are arranged in a spring chamber 20 which is separated from the brake chamber 10 by the brake piston 9, which is in communication with the atmosphere and in which a piston spring 21 is accommodated which biases the brake piston 9 into the released position. In this respect, this spring chamber 20 does not have to be pressure-tight. Also, a first and second annular washer 29a, 29b are arranged here between the first and second screw heads 12a, 12b and the first and second counter surfaces 15a, 15b respectively.

As **Fig. 2** best shows, the brake caliper 3 can have a first recess 23a or a second recess 23b in the area of the two bolt heads 12a, 12b or in the area of the two counter surfaces 15a, 15b or in the area of the two bolt eyes, respectively, in such a way that, viewed in a direction perpendicular to the bolt axes of the two bolts 11a and 11b, a screwing tool can be applied to the bolt heads 12a, 12b and then the bolts 11a, 11b can be screwed by means of a screwing tool. For this purpose, the screw heads 12a, 12b can have any attachment surface for the screwdriving tool, in this case, for example, an outer hexagonal profile for an open-end spanner. By applying the open-end spanner to the hexagonal profile of the screw heads 12a, 12b, the screw connections can therefore be assembled or loosened. Preferably, the fastening device comprises several such screw connections arranged in particular distributed over the circumference of the service brake cylinder 4, here for example two screw connections.

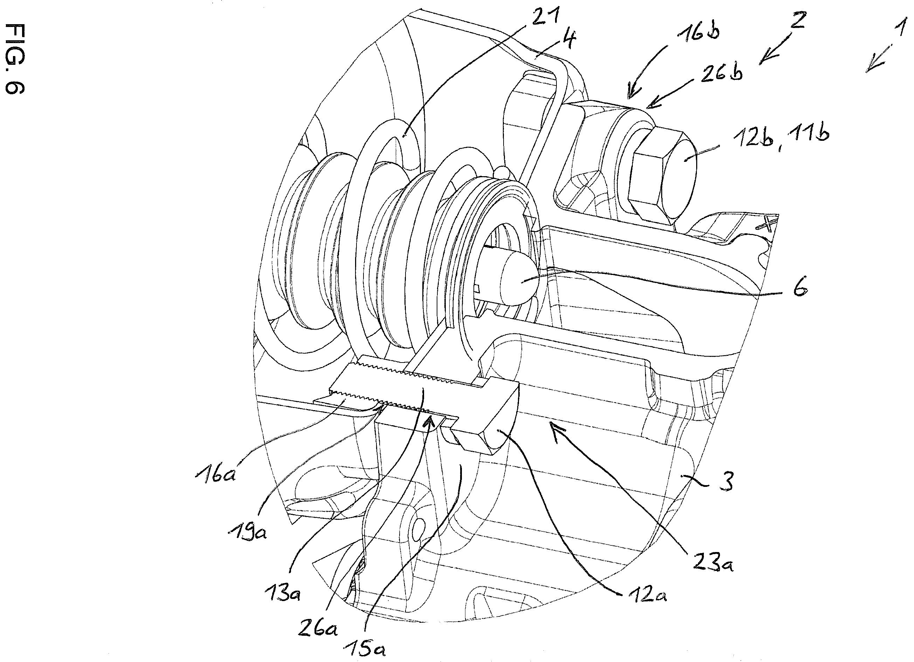

**Figures 6 to 11** show a further embodiment of a disc brake 1 and an associated centering device, which here, for example, does not form an integral part of the disc brake 1. In this embodiment of the disc brake 1, in particular, there are no first and second sleeves 28a and 28b, but the two bodies 16a and 16 are designed without such sleeves 28a, 28b, as shown in **Fig. 6****.**

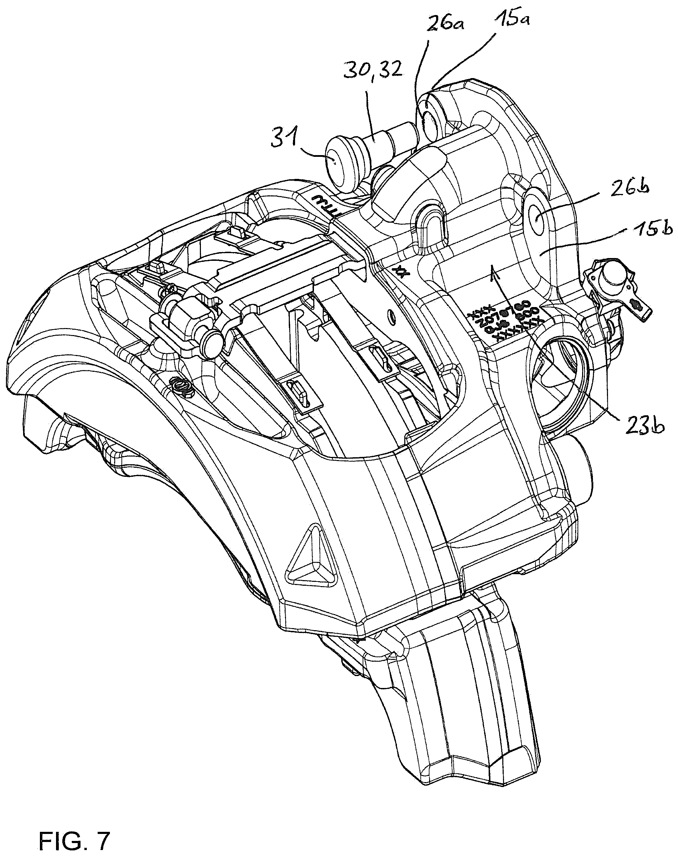

**Fig. 7** shows a perspective view of the brake caliper 3 of the disc brake 1 of **Fig. 6** in a step of a method for attaching the service brake cylinder 4 of the disc brake 1 to the brake caliper 3 by means of a centering pin 30. In this step, the service brake cylinder 4 is not yet mounted to the brake caliper 3 by the two screw connections.

The centering pin 30 here has, for example, a centering pin head 31 and a reduced diameter centering pin shaft 32. The centering pin head 31 is designed so that its outer diameter is larger than the inner diameter of the first and second brake caliper through holes 26a, 26b. Further, the centering pin shaft 32 is configured to have an outer diameter slightly smaller than the inner diameter of the first and second sleeves 28a and 28b.

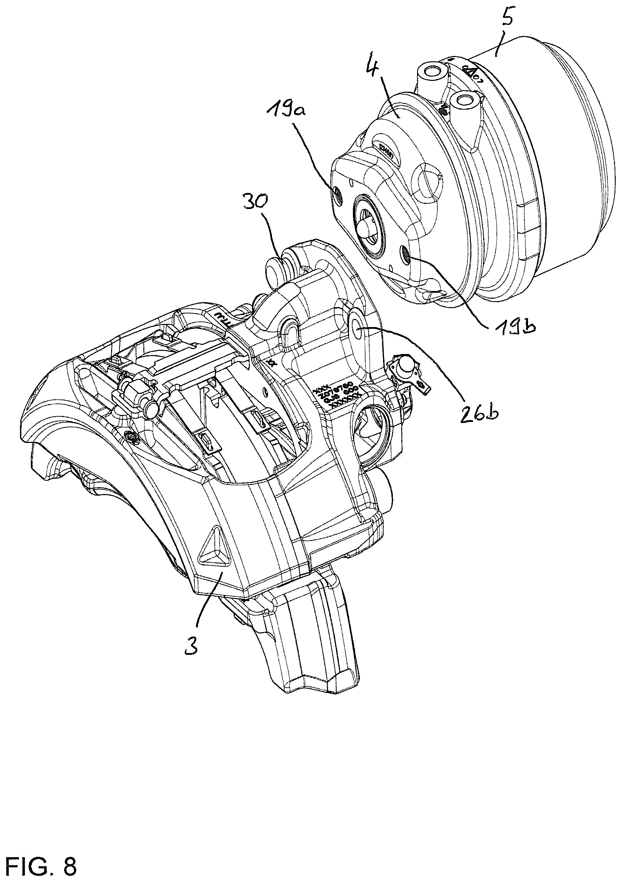

According to **Fig. 7****,** the centering pin 30 is first inserted into the first brake caliper through-hole 26a, for example. **Fig. 8** then shows the situation in which the centering pin 30 is inserted into the first brake caliper through-hole 26a to such an extent that its centering pin head 31 abuts against the first counter-surface 15a and its centering pin shaft 32 projects a little way out of the first brake caliper through-hole 26a in the direction pointing away from the first counter-surface 15a.

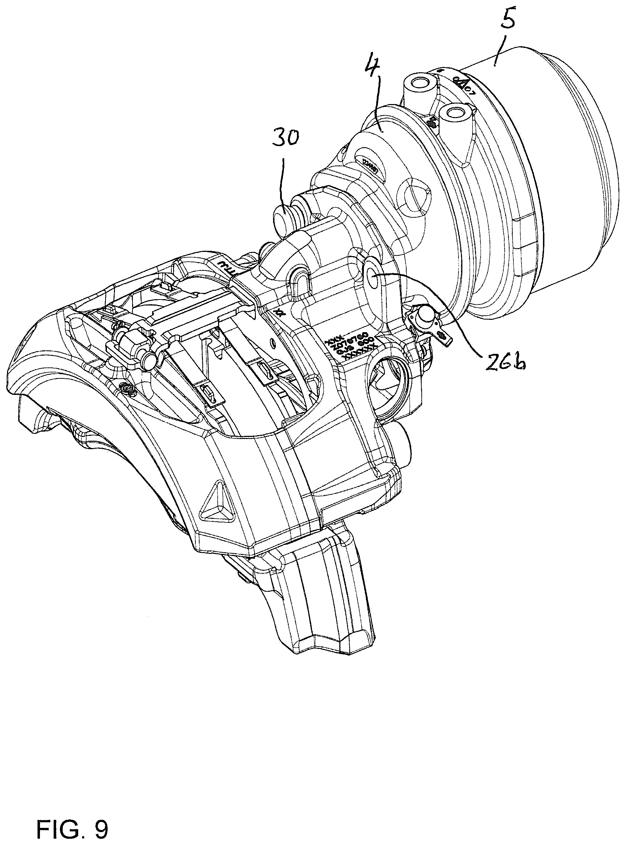

The service brake cylinder 4 is then fitted to the brake caliper 3 such that the now prominent centering pin shaft 32 is inserted through the first through bore 19a and into the first bore 14a of the first body 16a, which is shown in **Fig. 9****.** As a result, the brake caliper 3 and the service brake cylinder 4 are centered against each other at least in a plane perpendicular to a plane of separation between the service brake cylinder 4 and the brake caliper, with only a degree of rotational freedom remaining in this plane of separation. If not already done, the second brake caliper through-hole 26b and the second through-hole 19b or the second hole 14b are then brought into alignment with respect to the brake caliper 3 by (slightly) rotating the service brake cylinder 4.

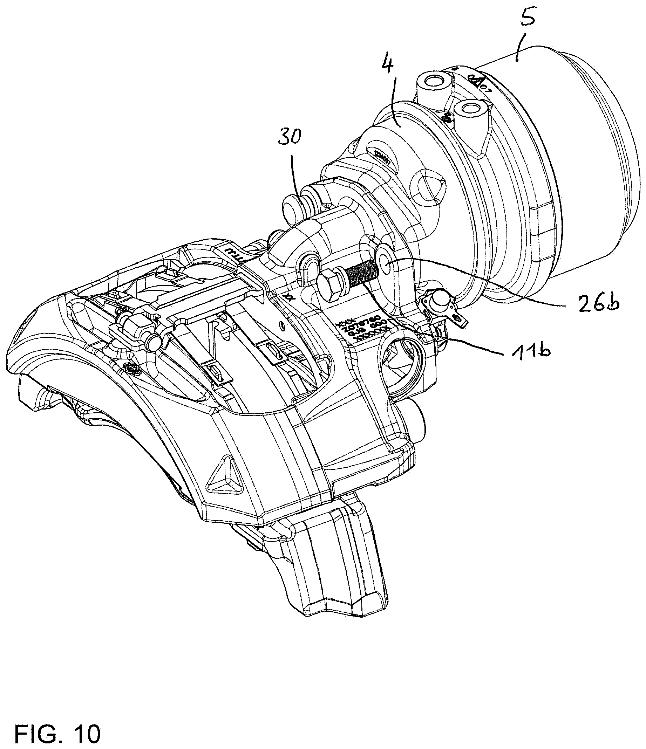

In a further step shown in **Fig. 10****, the** second screw 11b is then inserted into the second caliper through hole 26b and screwed into the second hole 14b until the second screw head 12b is locked against the second counter surface 15b.

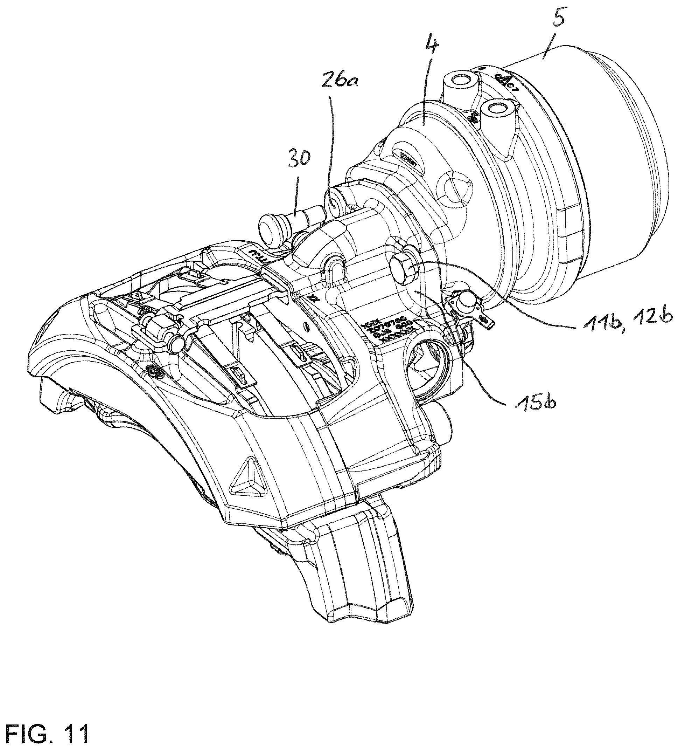

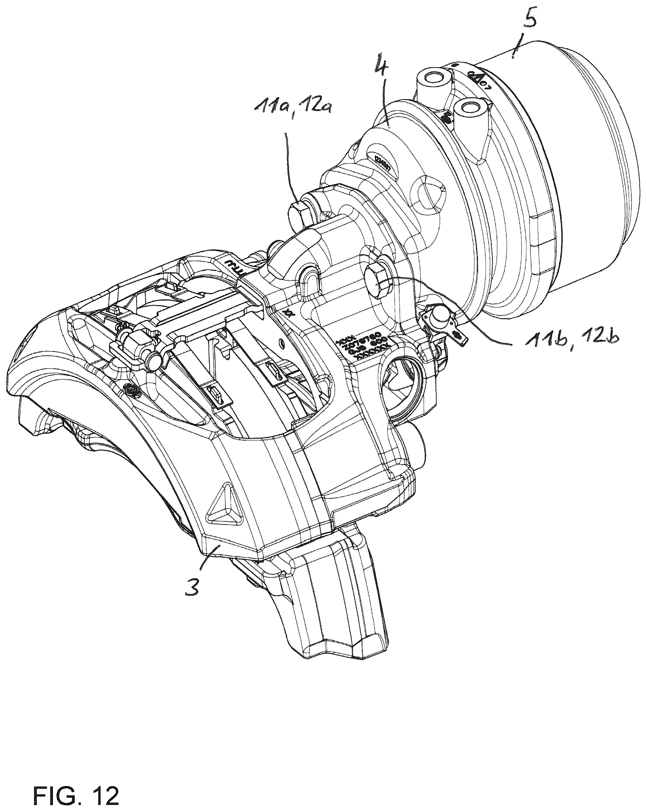

Referring to **Fig. 11****,** in a further step, the centering pin 30 is then removed from the first bore 14a and the first caliper through bore 26a. Then, in a further step shown in **Fig. 12****, the** first screw 14a is inserted and screwed into the first caliper through hole 26a and the first hole 14a until the first screw head 12a is locked against the first counter surface 15a. Thus, with the aid of the centering pin 30, the service brake cylinder 4 and the brake caliper 3 are centered against each other during assembly. It is clear that instead of inserting the centering pin 30 into the first brake caliper through-hole 26a, it can also be inserted into the second brake caliper through-hole 26b and then the further process steps are carried out in an analogous manner.

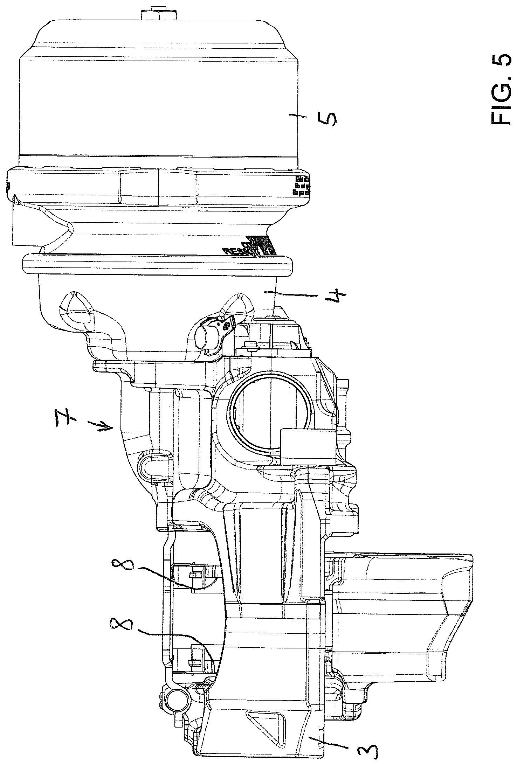

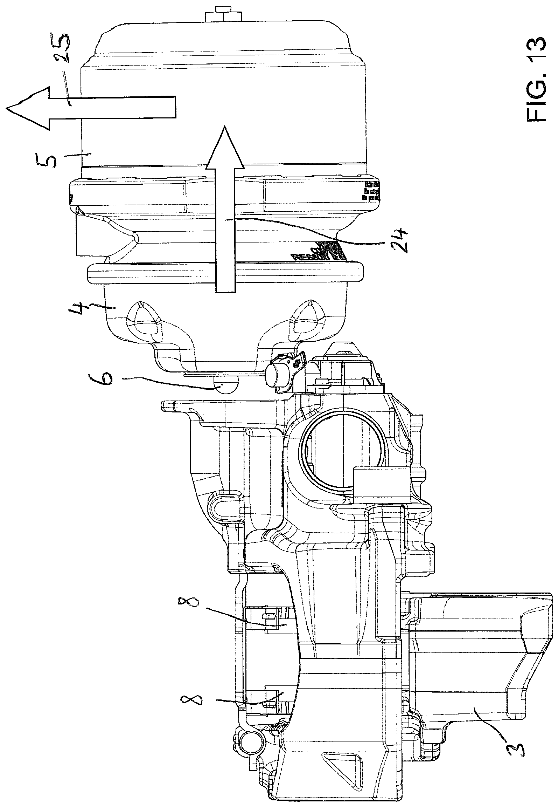

Starting from the assembled states of the service brake cylinder 4 on the brake caliper 3 of the two versions of the disc brake 1 described above as shown in **Fig. 5** and **Fig. 12****,** to detach the service brake cylinder 4 from the brake caliper 3, for example, the open-end spanner is therefore applied to the hexagonal profiles of the bolt heads 12a, 12b and then the two bolts 11a, 11b are successively unscrewed from the bores 14a, 14b of the bodies 16a, 16b and of the service brake cylinder 4 respectively and then removed. of the service brake cylinder 4 and then removed. Further, the end of the piston rod 6 of the service brake cylinder 4 is disengaged from the associated receptacle of the brake application device 7 in the brake caliper 3 by pulling the service brake cylinder 4 off the brake caliper 3 a short distance in the first direction indicated by the first arrow 24 in **Fig. 13****,** this first direction preferably being parallel to the piston rod 6. When the end of the piston rod 6 is then out of engagement with the associated receptacle of the brake application device 7, the service brake cylinder 4, which has been released from the brake caliper 3, is removed from the brake caliper 3 in a second direction indicated by the second arrow 25 in **Fig. 13****,** which is preferably perpendicular to the first direction, and can then be pulled out of the wheel housing transversely, for example.

According to a method for releasing the pneumatic brake cylinder 4 from the brake caliper 3 starting from the status of **Fig. 12** comprises the loosening and removing the screws 11a, 11b, and removing the service brake cylinder 4 from the brake caliper 3, in particular as seen in the direction of the longitudinal axes of the screws 11a, 11b, until the end of the piston rod 6 of the service brake cylinder 4 is out of engagement with the associated receptacle of the brake application device 7 in the brake caliper 3.

According to a another aspect, the method for releasing the pneumatic brake cylinder 4 from the brake caliper 3 starting from the status of **Fig. 12****,** where the first screw 11a projects through the first caliper through bore 26a and is screwed into the first bore 14a and where the second screw 11b projects through the second caliper through bore 26b and is screwed into the second bore 14b by means of the or a centering pin 30, comprises the following steps which are executed one after the other in time:
a1) removing the first screw 11a from the first bore 14a and from the first caliper through bore 26a, and
a2) guiding the centering pin 30 into the first brake caliper through bore 26a and into the first bore 14a in such a way that the brake caliper 3 and the brake cylinder 4 are thereby centered against each other, and
a3) removing the second screw 11b from the second bore 14b and from the second caliper through bore 26b according to **Fig. 10****,** and
a4) removing the pneumatic brake cylinder 4 from the brake caliper 3 by moving the pneumatic brake cylinder 4 in a direction which is parallel to a longitudinal axis of the centering pin 30 according to **Fig. 8****,** and
a5) removing the centering pin 30 from the first brake caliper through bore 26a and from the first bore 14a according to **Fig. 7****.**

### List of reference signs

- 1: Disc brake
- 2: Fastening device
- 3: Brake caliper
- 4: Service brake cylinder
- 5: Spring brake cylinder
- 6: Piston rod
- 7: Brake application device
- 8: Brake pads
- 9: Brake piston
- 10: Braking chamber
- 11a: First screw
- 11b: Second screw
- 12a: First screw head
- 12b: Second screw head
- 13a: First screw shank
- 13b: Second screw shank
- 14a: First bore
- 14b: Second bore
- 15a: First counter surface
- 15b: Second counter surface
- 16a: First body
- 16b: Second body
- 17: Brake cylinder wall
- 18: Weld seam
- 19a: First brake cylinder through bore
- 19b: Second brake cylinder through bore
- 20: Spring chamber
- 21: Piston spring
- 23a: First recess
- 23b: Second recess
- 24: First arrow
- 25: Second arrow
- 26a: First brake caliper through bore
- 26b: Second brake caliper through bore
- 27: Brake caliper wall
- 28a: First sleeve
- 28b: Second sleeve
- 29a: First ring washer
- 29b: Second ring washer
- 30: Centering pin
- 31: Centering pin head
- 32: Centering pin shaft

## Claims

1. Disc brake (1) for a commercial vehicle with a pneumatic brake cylinder (4), a brake disc, a brake caliper (3), a brake application device (7) and with brake pads (8), wherein the brake caliper (3) engages over the brake disc and the brake application device (7), which can be actuated by the brake cylinder (4), is arranged in the brake caliper (3), by means of which the brake linings (8) can be pressed against the brake disc on both sides during braking, wherein an extendable and retractable piston rod (6) of the brake cylinder (4) is in engagement with the brake application device (7) and the brake caliper (3) is detachably fastened to the brake cylinder (4) by means of a fastening device (2), wherein the fastening device (2) comprises at least one screw (11a, 11b) with a screw head (12a, 12b), a screw shank (13a, 13b) and an external thread formed on the screw shank (13a, 13b), and at least one bore (14a, 14b) which is formed in or on the brake cylinder (4) and has an internal thread and into which the screw shank (13a, 13b) is screwed with the external thread, the screw head (12a, 12b) is locked on a counter surface (15a, 15b) of the brake caliper (3), **characterized by** a centering device which is designed and provided in order to center the pneumatic brake cylinder (4) and the brake caliper (3) against one another independently of the screw connection of the at least one screw (13a, 13b) to the at least one bore (14a, 14b).

2. Disc brake according to claim 1, **characterized in that** the pneumatic brake cylinder (4)
a) is a combined service and spring brake cylinder, or
b) is a separate service brake cylinder.

3. Disc brake according to one of the preceding claims, **characterized in that** the at least one bore (14a, 14b) is formed in or on a brake cylinder wall (17) of the brake cylinder (4).

4. A disc brake according to any one of the preceding claims, **characterized in that** the caliper (3) has at least one caliper through bore (26a, 26b) in a caliper wall (27) of the caliper (3) through which the screw shank (13a, 13b) projects and on which the counter surface (15a, 15b) is formed.

5. Disc brake according to claim 4, **characterized in that** at least one caliper through-bore (26a, 26b) is made in a screw eye of the caliper (3).

6. Disc brake according to claim 4 or 5, **characterized in that** the fastening device (2) comprises at least
e) two screws, a first screw (11a) and a second screw (11b) each having a screw head (12a, 12b), a screw shank (13a, 13b) and an external thread formed on the screw shank (13a, 13b), and
f) two bores formed in or on the brake cylinder (4), a first bore (14a) and a second bore (14b) each having an internal thread, and
g) two caliper through bores (26a, 26b), a first caliper through bore (26a) having a first counter surface (15a) and a second caliper through bore (26b) having a second counter surface (15b), wherein
h) the first screw (11a) is screwed into the first bore (14a) and locked on the first counter surface (15a) and the second screw (11b) is screwed into the second bore (14b) and locked on the second counter surface (15b).

7. Disc brake according to one of the preceding claims, **characterized in that** the at least one bore (14a, 14b) is formed in a separate body (16a, 16b) which is detachably or non-detachably connected to the brake cylinder wall (17) of the brake cylinder (4).

8. Disc brake according to claim 7, **characterized in that** the separate body (16a, 16b) is arranged inside the brake cylinder (4) and the screw shaft (13a, 13b) extends through a brake cylinder through bore (19a, 19b) in the wall (17) of the brake cylinder (4) and is screwed into the bore (14a, 14b) of the body (16a, 16b).

9. Disc brake according to claim 7 or 8, **characterized in that** the separate body (16a, 16b) is welded to the brake cylinder wall (17).

10. Disc brake according to one of the preceding claims, **characterized in that** the centering device comprises :
a) at least one sleeve (28a, 28b) fixed to the brake cylinder (4) and projecting outwardly away from the brake cylinder (4), and the brake caliper through bore (26a, 26b), wherein the sleeve (28a, 28b) is inserted into the brake caliper through bore (26a, 26b), or
b) at least one sleeve (28a, 28b) fixed to the brake caliper (3) and projecting outwardly away from the brake caliper (3), and the brake cylinder through bore (19a, 19b), wherein the sleeve (28a, 28b) is inserted into the brake cylinder through bore (19a, 19b).

11. Disc brake according to claim 10, **characterized in that** the screw shank (13a, 13b) projects through the sleeve (28a, 28b) and is screwed into the bore (14a, 14b).

12. A disc brake according to any one of claims 7 to 9 and any one of claims 10 or 11, **characterized in that** the sleeve (28a, 28b) is connected to the separate body (16a; 16b) and projects through the brake cylinder through bore (19a, 19b).

13. Disc brake according to claim 12, **characterized in that** the sleeve (28a, 28b) is made in one piece with the separate body (16a , 16b).

14. Commercial vehicle with at least one disc brake according to at least one of the preceding claims.

15. Method for fastening a pneumatic brake cylinder (4) to a brake caliper (3) of a disc brake (1) for a commercial vehicle, which comprises the brake cylinder (4), a brake disc, the brake caliper (3), a brake application device (7) and brake linings (8), wherein the brake caliper (3) engages over the brake disc and the brake application device (7), which can be actuated by the brake cylinder (4), is arranged in the brake caliper (3), by means of which, during braking, the brake linings (8) are pressed against the brake disc on both sides, an extendable and retractable piston rod (6) of the brake cylinder (4) being in engagement with the brake application device (7), and the brake caliper (3) being releasably fastened to the brake cylinder (4) by means of a fastening device (2), wherein the fastening device (2) comprises at least two screws, a first screw (11a) and a second screw (11b), each having a screw head (12a, 12b), a screw shank (13a, 13b) and an external thread formed on the screw shank (13a, 13b), and at least two bores formed in or on the brake cylinder (4), a first bore (14a) and a second bore (14b) each having an internal thread, and at least two caliper through bores (26a, 26b), a first caliper through bore (26a) having a first counter surface (15a) and a second caliper through bore (26b) having a second counter surface (15b), by means of at least one centering pin (30), comprising at least the following steps:
a1) guiding the centering pin (30) into the first brake caliper through-bore (26a) and into the first bore (14a) in such a way that the brake caliper (3) and the brake cylinder (4) are thereby centered against each other, and
a2) inserting the second screw (14b) into the second caliper through-bore (26b) and screwing the second screw (11b) into the second bore (14b) until the second screw head (12b) is locked against the second counter surface (15b), and
a3) removing the centering pin from the first bore (14a) and the first caliper through bore (26a), and
a4) inserting the first screw (14a) into the first caliper through bore (26a) and screwing the first screw (11a) into the first bore (14a) until the first screw head (12a) is locked against the first counter surface (15a), or
b1) guiding the centering pin into the second caliper through-bore (26b) and into the second bore (14b) such that the caliper (3) and the brake cylinder (4) are thereby centered against each other, and
b2) inserting the first screw (14a) into the first caliper through bore (26a) and screwing the first screw (11a) into the first bore (14a) until the first screw head (12a) is locked against the first counter surface (15a), and
b3) removing the centering pin from the second bore (14b) and the second caliper through bore (26b), and
b4) inserting the second screw (14b) into the second caliper through hole (26b) and screwing the second screw (11b) into the second hole (14b) until the second screw head (12b) is locked against the second counter surface (15b).

16. Method for releasing a pneumatic brake cylinder (4) from a brake caliper (3) of a disc brake (1) for a commercial vehicle, which comprises the brake cylinder (4), a brake disc, the brake caliper (3), a brake application device (7) and brake linings (8), wherein the brake caliper (3) engages over the brake disc and the brake application device (7), which can be actuated by the brake cylinder (4), is arranged in the brake caliper (3), by means of which, during braking, the brake linings (8) are pressed against the brake disc on both sides, an extendable and retractable piston rod (6) of the brake cylinder (4) being in engagement with the brake application device (7), and the brake caliper (3) being releasably fastened to the brake cylinder (4) by means of a fastening device (2), wherein the fastening device (2) comprises at least two screws, a first screw (11a) and a second screw (11b), each having a screw head (12a, 12b), a screw shank (13a, 13b) and an external thread formed on the screw shank (13a, 13b), and at least two bores formed in or on the brake cylinder (4), a first bore (14a) and a second bore (14b) each having an internal thread, and at least two caliper through bores (26a, 26b), a first caliper through bore (26a) having a first counter surface (15a) and a second caliper through bore (26b) having a second counter surface (15b), where the first screw (11a) projects through the first caliper through bore (26a) and is screwed into the first bore (14a) and where the second screw (11b) projects through the second caliper through bore (26b) and is screwed into the second bore (14b) by means of at least one centering pin (30), comprising at least the following steps:
a1) removing the first screw (11a) from the first bore (14a) and from the first caliper through bore (26a), and
a2) guiding the centering pin (30) into the first brake caliper through bore (26a) and into the first bore (14a) in such a way that the brake caliper (3) and the brake cylinder (4) are thereby centered against each other, and
a3) removing the second screw (11b) from the second bore (14b) and from the second caliper through bore (26b), and
a4) removing the pneumatic brake cylinder (4) from the brake caliper (3) by moving the pneumatic brake cylinder (4) in a direction which is parallel to an axis of the centering pin (30), and
a5) removing the centering pin (30) from the first brake caliper through bore (26a) and from the first bore (14a), or
b1) removing the second screw (11b) from the second bore (14b) and from the second caliper through bore (26b), and
b2) guiding the centering pin (30) into the second brake caliper through bore (26b) and into the second bore (14b) in such a way that the brake caliper (3) and the brake cylinder (4) are thereby centered against each other, and
b3) removing the first screw (11a) from the first bore (14a) and from the first caliper through bore (26a), and
b4) removing the pneumatic brake cylinder (4) from the brake caliper (3) by moving the pneumatic brake cylinder (4) in a direction which is parallel to an axis of the centering pin (30), and
b5) removing the centering pin (30) from the second brake caliper through bore (26b) and from the second bore (14b).

17. Method for attaching the brake cylinder (4) to the brake caliper (3) of the disc brake (1) according to at least one of claims 1 to 9 with the aid of a centering device according to at least one of claims 10 to 13, comprising at least the following steps:
a) inserting the sleeve (28a, 28b) attached to the brake cylinder (4) and projecting away from the brake cylinder (4) into the brake caliper through bore (26a, 26b), or
b) inserting the sleeve (28a, 28b) fixed to the brake caliper (3) and projecting away from the brake caliper (3) into the brake cylinder through bore (19a, 19b), and
c) screwing the at least one screw (11a, 11b) into the at least one bore (14a, 14b).

18. Method for releasing the brake cylinder (4) from the brake caliper (3) of the disc brake (1) according to at least one of claims 1 to 13 comprising at least the following steps:
a) applying a screw driving tool to the at least one screw head (12a, 12b),
b) unscrewing the at least one screw (11a, 11b) from the bore (14a, 14b),
c) removing the at least one screw (11a, 11b),
d) disengaging the piston rod (6) of the brake cylinder (4) from the brake application device (7) in the brake caliper (3),
e) removing the brake cylinder (4) from the disc brake caliper (3).

## Patentansprüche

1. Scheibenbremse (1) für ein Nutzfahrzeug mit einem pneumatischen Bremszylinder (4), einer Bremsscheibe, einem Bremssattel (3), einer Bremsanwendungsvorrichtung (7) und mit Bremsklötzen (8), wobei der Bremssattel (3) über der Bremsscheibe und die Bremsanwendungsvorrichtung (7) eingreift, die durch den Bremszylinder (4) betätigt werden kann, in dem Bremssattel (3) angeordnet ist, mit dessen Hilfe die Bremsbeläge (8) beim Bremsen an beiden Seiten gegen die Bremsscheibe gedrückt werden können, wobei eine ausfahrbare und einziehbare Kolbenstange (6) des Bremszylinders (4) mit der Bremsanwendungsvorrichtung (7) in Eingriff steht und der Bremssattel (3) mit Hilfe einer Befestigungsvorrichtung (2) lösbar an dem Bremszylinder (4) befestigt ist, wobei die Befestigungsvorrichtung (2) mindestens eine Schraube (11a, 11b) mit einem Schraubenkopf (12a, 12b), einem Schraubenschaft (13a, 13b) und einem an dem Schraubenschaft (13a, 13b) gebildeten Außengewinde und mindestens eine Bohrung (14a, 14b) umfasst, die in oder an dem Bremszylinder (4) gebildet ist, und ein Innengewinde aufweist, und in die der Schraubenschaft (13a, 13b) mit dem Außengewinde geschraubt ist, wobei der Schraubenkopf (12a, 12b) an einer Gegenoberfläche (15a, 15b) des Bremssattels (3) verriegelt ist, durch eine Zentriervorrichtung **gekennzeichnet,** die gestaltet und bereitgestellt ist, um den pneumatischen Bremszylinder (4) und den Bremssattel (3) unabhängig von der Schraubenverbindung der mindestens einen Schraube (13a, 13b) zur mindestens einen Bohrung (14a, 14b) gegeneinander zu zentrieren.

2. Scheibenbremse nach Anspruch 1, **dadurch gekennzeichnet, dass** der pneumatische Bremszylinder (4)
a) ein kombinierter Betriebs- und Federspeicherbremszylinder ist oder
b) ein separater Betriebsbremszylinder ist.

3. Scheibenbremse nach einem der vorstehenden Ansprüche, **dadurch gekennzeichnet, dass** die mindestens eine Bohrung (14a, 14b) in oder an einer Bremszylinderwand (17) des Bremszylinders (4) gebildet ist.

4. Scheibenbremse nach einem der vorstehenden Ansprüche, **dadurch gekennzeichnet, dass** der Bremssattel (3) mindestens eine Bremssattel-Durchgangsbohrung (26a, 26b) in einer Bremssattelwand (27) des Bremssattels (3) aufweist, durch die der Schraubenschaft (13a, 13b) ragt und an der die Gegenoberfläche (15a, 15b) gebildet ist.

5. Scheibenbremse nach Anspruch 4, **dadurch gekennzeichnet, dass** mindestens eine Bremssattel-Durchgangsbohrung (26a, 26b) in einer Ösenschraube des Bremssattels (3) gefertigt ist.

6. Scheibenbremse nach Anspruch 4 oder 5, **dadurch gekennzeichnet, dass** die Befestigungsvorrichtung (2) mindestens
e) zwei Schrauben, eine erste Schraube (11a) und eine zweite Schraube (11b), die jeweils einen Schraubenkopf (12a, 12b), einen Schraubenschaft (13a, 13b) und ein am Schraubenschaft (13a, 13b) gebildetes Außengewinde aufweisen, und
f) zwei im oder am Bremszylinder (4) gebildete Bohrungen, eine erste Bohrung (14a) und eine zweite Bohrung (14b), die jeweils ein Innengewinde aufweisen, und
g) zwei Bremssattel-Durchgangsbohrungen (26a, 26b), eine erste Bremssattel-Durchgangsbohrung (26a), die eine erste Gegenoberfläche (15a) aufweist, und eine zweite Bremssattel-Durchgangsbohrung (26b), die eine zweite Gegenoberfläche (15b) aufweist, umfasst, wobei
h) die erste Schraube (11a) in die erste Bohrung (14a) geschraubt wird, und auf der ersten Gegenoberfläche (15a) verriegelt wird und die zweite Schraube (11b) in die zweite Bohrung (14b) geschraubt wird, und auf der zweiten Gegenoberfläche (15b) verriegelt wird.

7. Scheibenbremse nach einem der vorstehenden Ansprüche, **dadurch gekennzeichnet, dass** die mindestens eine Bohrung (14a, 14b) in einem separaten Körper (16a, 16b) gebildet wird, der lösbar oder unlösbar mit der Bremszylinderwand (17) des Bremszylinders (4) verbunden ist.

8. Scheibenbremse nach Anspruch 7, **dadurch gekennzeichnet, dass** der separate Körper (16a, 16b) innerhalb des Bremszylinders (4) angeordnet ist und sich die Schraubenwelle (13a, 13b) durch eine Bremszylinder-Durchgangsbohrung (19a, 19b) in der Wand (17) des Bremszylinders (4) hindurch erstreckt und in die Bohrung (14a, 14b) des Körpers (16a, 16b) geschraubt ist.

9. Scheibenbremse nach Anspruch 7 oder 8, **dadurch gekennzeichnet, dass** der separate Körper (16a, 16b) mit der Bremszylinderwand (17) verschweißt ist.

10. Scheibenbremse nach einem der vorstehenden Ansprüche, **dadurch gekennzeichnet, dass** die Zentriervorrichtung umfasst:
a) mindestens eine Hülse (28a, 28b), die am Bremszylinder (4) befestigt ist und vom Bremszylinder (4) nach außen weg vorsteht, und die Bremssattel-Durchgangsbohrung (26a, 26b), wobei die Hülse (28a, 28b) in die Bremssattel-Durchgangsbohrung (26a, 26b) eingeführt ist, oder
b) mindestens eine Hülse (28a, 28b), die am Bremssattel (3) befestigt ist und nach außen vom Bremssattel (3) weg vorsteht, und die Bremszylinder-Durchgangsbohrung (19a, 19b), wobei die Hülse (28a, 28b) in die Bremszylinder-Durchgangsbohrung (19a, 19b) eingeführt ist.

11. Scheibenbremse nach Anspruch 10, **dadurch gekennzeichnet, dass** der Schraubenschaft (13a, 13b) durch die Hülse (28a, 28b) hindurch vorsteht und in die Bohrung (14a, 14b) geschraubt ist.

12. Scheibenbremse nach einem der Ansprüche 7 bis 9 und einem der Ansprüche 10 oder 11, **dadurch gekennzeichnet, dass** die Hülse (28a, 28b) mit dem separaten Körper (16a; 16b) verbunden ist und durch die Bremszylinder-Durchgangsbohrung (19a, 19b) hindurch vorsteht.

13. Scheibenbremse nach Anspruch 12, **dadurch gekennzeichnet, dass** die Hülse (28a, 28b) in einem Stück mit dem separaten Körper (16a, 16b) gefertigt ist.

14. Nutzfahrzeug mit mindestens einer Scheibenbremse nach mindestens einem der vorstehenden Ansprüche.

15. Verfahren zum Befestigen eines pneumatischen Bremszylinders (4) an einem Bremssattel (3) einer Scheibenbremse (1) für ein Nutzfahrzeug, das den Bremszylinder (4), eine Bremsscheibe, den Bremssattel, eine Bremsanwendungsvorrichtung (7) und Bremsklötze (8) umfasst, wobei der Bremssattel (3) über der Bremsscheibe und die Bremsanwendungsvorrichtung (7) eingreift, die durch den Bremszylinder (4) betätigt werden kann, in dem Bremssattel (3) angeordnet ist, mit dessen Hilfe die Bremsbeläge (8) beim Bremsen an beiden Seiten gegen die Bremsscheibe gedrückt werden, wobei eine ausfahrbare und einziehbare Kolbenstange (6) des Bremszylinders (4) mit der Bremsanwendungsvorrichtung (7) in Eingriff steht, und der Bremssattel (3) mit Hilfe einer Befestigungsvorrichtung (2) lösbar an dem Bremszylinder (4) befestigt ist, wobei die Befestigungsvorrichtung (2) mindestens zwei Schrauben, eine erste Schraube (11a) und eine zweite Schraube (11b), die jeweils einen Schraubenkopf (12a, 12b), einen Schraubenschaft (13a, 13b) und ein an dem Schraubenschaft (13a, 13b) gebildetes Außengewinde aufweisen, und mindestens zwei Bohrungen, die in oder auf dem Bremszylinder (4) gebildet sind, eine erste Bohrung (14a) und eine zweite Bohrung (14b), die jeweils ein Innengewinde aufweisen, umfasst, und mindestens zwei Bremssattel-Durchgangsbohrungen (26a, 26b), eine erste Bremssattel-Durchgangsbohrung (26a), die eine erste Gegenoberfläche (15a) aufweist, und eine zweite Bremssattel-Durchgangsbohrung (26b), die eine zweite Gegenoberfläche (15b) aufweist, mit Hilfe mindestens eines Zentrierstifts (30), mindestens die folgenden Schritte umfassend:
a1) Führen des Zentrierstifts (30) in die erste Bremssattel-Durchgangsbohrung (26a) und in die erste Bohrung (14a), sodass der Bremssattel (3) und Bremszylinder (4) dadurch gegeneinander zentriert werden, und
a2) Einführen der zweiten Schraube (14b) in die zweite Bremssattel-Durchgangsbohrung (26b) und Schrauben der zweiten Schraube (11b) in die zweite Bohrung (14b), bis der zweite Schraubenkopf (12b) an der zweiten Gegenoberfläche (15b) verriegelt ist, und
a3) Entfernen des Zentrierstifts aus der ersten Bohrung (14a) und der ersten Bremssattel-Durchgangsbohrung (26a) und
a4) Einführen der ersten Schraube (14a) in die erste Bremssattel-Durchgangsbohrung (26a) und Schrauben der ersten Schraube (11a) in die erste Bohrung (14a), bis der erste Schraubenkopf (12a) an der ersten Gegenoberfläche (15a) verriegelt ist, oder
b1) Führen des Zentrierstifts in die zweite Bremssattel-Durchgangsbohrung (26b) und in die zweite Bohrung (14b), sodass der Bremssattel (3) und der Bremszylinder (4) dadurch gegeneinander zentriert werden, und
b2) Einführen der ersten Schraube (14a) in die erste Bremssattel-Durchgangsbohrung (26a) und Schrauben der ersten Schraube (11a) in die erste Bohrung (14a), bis der erste Schraubenkopf (12a) an der ersten Gegenoberfläche (15a) verriegelt ist, und
b3) Entfernen des Zentrierstifts aus der zweiten Bohrung (14b) und der zweiten Bremssattel-Durchgangsbohrung (26b) und
b4) Einführen der zweiten Schraube (14b) in das zweite Bremssattel-Durchgangsloch (26b) und Schrauben der zweiten Schraube (11b) in das zweite Loch (14b), bis der zweite Schraubenkopf (12b) an der zweiten Gegenoberfläche (15b) verriegelt ist.

16. Verfahren zum Lösen eines pneumatischen Bremszylinders (4) von einem Bremssattel (3) einer Scheibenbremse (1) für ein Nutzfahrzeug, das den Bremszylinder (4), eine Bremsscheibe, den Bremssattel (3), eine Bremsanwendungsvorrichtung (7) und Bremsklötze (8) umfasst, wobei der Bremssattel (3) über der Bremsscheibe und die Bremsanwendungsvorrichtung (7) eingreift, die durch den Bremszylinder (4) betätigt werden kann, in dem Bremssattel (3) angeordnet ist, mit dessen Hilfe die Bremsbeläge (8) beim Bremsen an beiden Seiten gegen die Bremsscheibe gedrückt werden, wobei eine ausfahrbare und einziehbare Kolbenstange (6) des Bremszylinders (4) mit der Bremsanwendungsvorrichtung (7) in Eingriff steht, und der Bremssattel (3) mit Hilfe einer Befestigungsvorrichtung (2) lösbar an dem Bremszylinder (4) befestigt ist, wobei die Befestigungsvorrichtung (2) mindestens zwei Schrauben, eine erste Schraube (11a) und eine zweite Schraube (11b), die jeweils einen Schraubenkopf (12a, 12b), einen Schraubenschaft (13a, 13b) und ein an dem Schraubenschaft (13a, 13b) gebildetes Außengewinde aufweisen, und mindestens zwei Bohrungen, die in oder auf dem Bremszylinder (4) gebildet sind, eine erste Bohrung (14a) und eine zweite Bohrung (14b), die jeweils ein Innengewinde aufweisen, umfasst, und mindestens zwei Bremssattel-Durchgangsbohrungen (26a, 26b), eine erste Bremssattel-Durchgangsbohrung (26a), die eine erste Gegenoberfläche (15a) aufweist, und eine zweite Bremssattel-Durchgangsbohrung (26b), die eine zweite Gegenoberfläche (15b) aufweist, wo die erste Schraube (11a) durch die erste Bremssattel-Durchgangsbohrung (26a) hindurch vorsteht und in die erste Bohrung (14a) geschraubt ist, und wo die zweite Schraube (11b) durch die zweite Bremssattel-Durchgangsbohrung (26b) hindurch vorsteht und in die zweite Bohrung (14b) geschraubt ist, mit Hilfe mindestens eines Zentrierstifts (30), mindestens die folgenden Schritte umfassend:
a1) Entfernen der ersten Schraube (11a) aus der ersten Bohrung (14a) und aus der ersten Bremssattel-Durchgangsbohrung (26a) und
a2) Führen des Zentrierstifts (30) in die erste Bremssattel-Durchgangsbohrung (26a) und in die erste Bohrung (14a), sodass Bremssattel (3) und Bremszylinder (4) dadurch gegeneinander zentriert werden, und
a3) Entfernen der zweiten Schraube (11b) aus der zweiten Bohrung (14b) und aus der zweiten Bremssattel-Durchgangsbohrung (26b), und
a4) Entfernen des pneumatischen Bremszylinders (4) vom Bremssattel (3) durch Bewegen des pneumatischen Bremszylinders (4) in einer Richtung, die parallel zu einer Achse des Zentrierstifts (30) verläuft, und
a5) Entfernen des Zentrierstifts (30) aus der ersten Bremssattel-Durchgangsbohrung (26a) und aus der ersten Bohrung (14a) oder
b1) Entfernen der zweiten Schraube (11b) aus der zweiten Bohrung (14b) und aus der zweiten Bremssattel-Durchgangsbohrung (26b) und
b2) Führen des Zentrierstifts (30) in die zweite Bremssattel-Durchgangsbohrung (26b) und in die zweite Bohrung (14b), sodass Bremssattel (3) und Bremszylinder (4) dadurch gegeneinander zentriert werden, und
b3) Entfernen der ersten Schraube (11a) aus der ersten Bohrung (14a) und aus der ersten Bremssattel-Durchgangsbohrung (26a) und
b4) Entfernen des pneumatischen Bremszylinders (4) vom Bremssattel (3) durch Bewegen des pneumatischen Bremszylinders (4) in einer Richtung, die parallel zu einer Achse des Zentrierstifts (30) verläuft, und
b5) Entfernen des Zentrierstifts (30) aus der zweiten Bremssattel-Durchgangsbohrung (26b) und aus der zweiten Bohrung (14b).

17. Verfahren zum Anbringen des Bremszylinders (4) am Bremssattel (3) der Scheibenbremse (1) nach mindestens einem der Ansprüche 1 bis 9 mit der Hilfe einer Zentriervorrichtung nach mindestens einem der Ansprüche 10 bis 13, mindestens die folgenden Schritte umfassend:
a) Einführen der am Bremszylinder (4) angebrachten, und vom Bremszylinder (4) vorstehenden Hülse (28a, 28b) in die Bremssattel-Durchgangsbohrung (26a, 26b), oder
b) Einführen der am Bremssattel (3) befestigten und vom Bremssattel (3) vorstehenden Hülse (28a, 28b) in die Bremszylinder-Durchgangsbohrung (19a, 19b), und
c) Schrauben der mindestens einen Schraube (11a, 11b) in die mindestens eine Bohrung (14a, 14b).

18. Verfahren zum Lösen des Bremszylinders (4) von dem Bremssattel (3) der Scheibenbremse (1) nach einem der Ansprüche 1 bis 13, mindestens die folgenden Schritte umfassend:
a) Ansetzen eines Schraubwerkzeugs an den mindestens einen Schraubenkopf (12a, 12b),
b) Ausschrauben der mindestens einen Schraube (11a, 11b) aus der Bohrung (14a, 14b),
c) Entfernen der mindestens einen Schraube (11a, 11b),
d) Lösen der Kolbenstange (6) des Bremszylinders (4) von der Bremsanwendungsvorrichtung (7) in dem Bremssattel (3),
e) Entfernen des Bremszylinders (4) vom Scheibenbremssattel (3).

## Revendications

1. Frein à disque (1) pour un véhicule utilitaire comportant un cylindre de frein pneumatique (4), un disque de frein, un étrier de frein (3), un dispositif d'application de frein (7) et des plaquettes de frein (8), dans lequel l'étrier de frein (3) vient en prise sur le disque de frein et le dispositif d'application de frein (7), qui peut être actionné par le cylindre de frein (4), est agencé dans l'étrier de frein (3), au moyen duquel les garnitures de frein (8) peuvent être pressées des deux côtés contre le disque de frein pendant un freinage, dans lequel une tige de piston extensible et rétractable (6) du cylindre de frein (4) est en prise avec le dispositif d'application de frein (7) et l'étrier de frein (3) est fixé de manière amovible au cylindre de frein (4) au moyen d'un dispositif de fixation (2), dans lequel le dispositif de fixation (2) comprend au moins une vis (11a, 11b) avec une tête de vis (12a, 12b), une tige de vis (13a, 13b) et un filetage externe formé sur la tige de vis (13a, 13b) et au moins un alésage (14a, 14b) qui est formé dans ou sur le cylindre de frein (4) et présente un filetage interne et dans lequel la tige de vis (13a, 13b) est vissée avec le filetage externe, la tête de vis (12a, 12b) est verrouillée sur une contre-surface (15a, 15b) de l'étrier de frein (3), **caractérisé par** un dispositif de centrage conçu et fourni afin de centrer le cylindre de frein pneumatique (4) et l'étrier de frein (3) l'un par rapport à l'autre, indépendamment de l'assemblage par vis de la au moins une vis (13a, 13b) à l'au moins un alésage (14a, 14b).

2. Frein à disque selon la revendication 1, **caractérisé en ce que** le cylindre de frein pneumatique (4)
a) est un cylindre de frein de service et de frein à ressort combiné, ou
b) est un cylindre de frein de service distinct.

3. Frein à disque selon l'une des revendications précédentes, **caractérisé en ce que** le au moins un alésage (14a, 14b) est formé dans ou sur une paroi (17) de cylindre de frein du cylindre de frein (4).

4. Frein à disque selon l'une quelconque des revendications précédentes, **caractérisé en ce que** l'étrier (3) présente au moins un alésage traversant (26a, 26b) d'étrier dans une paroi (27) d'étrier de l'étrier (3) à travers laquelle fait saillie la tige de vis (13a, 13b) et sur laquelle est formée la contre-surface (15a, 15b).

5. Frein à disque selon la revendication 4, **caractérisé en ce qu'**au moins un alésage traversant (26a, 26b) d'étrier est réalisé dans un œillet de à vis de l'étrier (3).

6. Frein à disque selon la revendication 4 ou 5, **caractérisé en ce que** le dispositif de fixation (2) comprend au moins
e) deux vis, une première vis (11a) et une seconde vis (11b) présentant chacune une tête de vis (12a, 12b), une tige de vis (13a, 13b) et un filetage externe formé sur la tige de vis (13a, 13b), et
f) deux alésages formés dans ou sur le cylindre de frein (4), un premier alésage (14a) et un second alésage (14b) présentant chacun un filetage interne, et
g) deux alésages traversants (26a, 26b) d'étrier, un premier alésage traversant (26a) d'étrier présentant une première contre-surface (15a) et un second alésage traversant (26b) d'étrier présentant une seconde contre-surface (15b), dans lequel
h) la première vis (11a) est vissée dans le premier alésage (14a) et verrouillée sur la première contre-surface (15a) et la seconde vis (11b) est vissée dans le second alésage (14b) et verrouillée sur la seconde contre-surface (15b).

7. Frein à disque selon l'une des revendications précédentes, **caractérisé en ce que** le au moins un alésage (14a, 14b) est formé dans un corps distinct (16a, 16b) qui est relié de manière amovible ou non amovible à la paroi (17) de cylindre de frein du cylindre de frein (4).

8. Frein à disque selon la revendication 7, **caractérisé en ce que** le corps distinct (16a, 16b) est agencé à l'intérieur du cylindre de frein (4) et la tige de vis (13a, 13b) s'étend à travers un alésage traversant (19a, 19b) de cylindre de frein dans la paroi (17) du cylindre de frein (4) et est vissée dans l'alésage (14a, 14b) du corps (16a, 16b).

9. Frein à disque selon la revendication 7 ou 8, **caractérisé en ce que** le corps distinct (16a, 16b) est soudé à la paroi (17) du cylindre de frein.

10. Frein à disque selon l'une des revendications précédentes, **caractérisé en ce que** le dispositif de centrage comprend :
a) au moins un manchon (28a, 28b) fixé au cylindre de frein (4) et faisant saillie vers l'extérieur à l'écart du cylindre de frein (4), et à l'alésage traversant (26a, 26b) d'étrier de frein, dans lequel le manchon (28a, 28b) est inséré dans l'alésage traversant (26a, 26b) d'étrier de frein, ou
b) au moins un manchon (28a, 28b) fixé à l'étrier de frein (3) et faisant saillie vers l'extérieur à l'écart de l'étrier de frein (3), et à l'alésage traversant (19a, 19b) de cylindre de frein, dans lequel le manchon (28a, 28b) est inséré dans l'alésage traversant (19a, 19b) de cylindre de frein.

11. Frein à disque selon la revendication 10, **caractérisé en ce que** la tige de vis (13a, 13b) fait saillie à travers le manchon (28a, 28b) et est vissée dans l'alésage (14a, 14b).

12. Frein à disque selon l'une quelconque des revendications 7 à 9 et l'une quelconque des revendications 10 ou 11, **caractérisé en ce que** le manchon (28a, 28b) est relié au corps distinct (16a ; 16b) et fait saillie à travers l'alésage traversant (19a, 19b) de cylindre de frein.

13. Frein à disque selon la revendication 12, **caractérisé en ce que** le manchon (28a, 28b) est réalisé d'une seule pièce avec le corps distinct (16a, 16b).

14. Véhicule utilitaire avec au moins un frein à disque selon au moins l'une des revendications précédentes.

15. Procédé de fixation d'un cylindre de frein pneumatique (4) d'un étrier de frein (3) d'un frein à disque (1) pour un véhicule utilitaire, qui comprend le cylindre de frein (4), un disque de frein, l'étrier de frein (3), un dispositif d'application de frein (7) et des garnitures de frein (8), dans lequel l'étrier de frein (3) vient en prise sur le disque de frein et le dispositif d'application de frein (7), qui peut être actionné par le cylindre de frein (4), est agencé dans l'étrier de frein (3), au moyen duquel, pendant le freinage, les garnitures de frein (8) sont pressées des deux côtés contre le disque de frein, une tige de piston extensible et rétractable (6) du cylindre de frein (4) étant en prise avec le dispositif d'application de frein (7) et l'étrier de frein (3) étant fixé de manière amovible au cylindre de frein (4) au moyen d'un dispositif de fixation (2), dans lequel le dispositif de fixation (2) comprend au moins deux vis, une première vis (11a) et une seconde vis (11b), chacune présentant une tête de vis (12a, 12b), une tige de vis (13a, 13b) et un filetage externe formé sur la tige de vis (13a, 13b) et au moins deux alésages formés dans ou sur le cylindre de frein (4), un premier alésage (14a) et un second alésage (14b) présentant chacun un filetage interne, et au moins deux alésages traversants (26a, 26b) d'étrier, un premier alésage traversant (26a) d'étrier présentant une première contre-surface (15a) et un second alésage traversant (26b) d'étrier présentant une seconde contre-surface (15b) au moyen d'au moins une goupille de centrage (30), comprenant au moins les étapes suivantes :
a1) le guidage de la goupille de centrage (30) dans le premier alésage traversant (26a) d'étrier de frein et dans le premier alésage (14a) de sorte que l'étrier de frein (3) et le cylindre de frein (4) soient ainsi centrés l'un par rapport à l'autre, et
a2) l'insertion de la seconde vis (14b) dans le second alésage traversant (26b) d'étrier et le vissage de la seconde vis (11b) dans le second alésage (14b) jusqu'à ce que la seconde tête de vis (12b) soit verrouillée contre la seconde contre-surface (15b), et
a3) le retrait de la goupille de centrage du premier alésage (14a) et du premier alésage traversant (26a) d'étrier, et
a4) l'insertion de la première vis (14a) dans le premier alésage traversant (26a) d'étrier et le vissage de la première vis (11a) dans le premier alésage (14a) jusqu'à ce que la première tête de vis (12a) soit verrouillée contre la première contre-surface (15a), ou
b1) le guidage de la goupille de centrage dans le second alésage traversant (26b) d'étrier et dans le second alésage (14b) de sorte que l'étrier (3) et le cylindre de frein (4) soient ainsi centrés l'un par rapport à l'autre, et
b2) l'insertion de la première vis (14a) dans le premier alésage traversant (26a) d'étrier et le vissage de la première vis (11a) dans le premier alésage (14a) jusqu'à ce que la première tête de vis (12a) soit verrouillée contre la première contre-surface (15a), et
b3) le retrait de la goupille de centrage du second alésage (14b) et du second alésage traversant (26b) d'étrier, et
b4) l'insertion de la seconde vis (14b) dans le second trou traversant (26b) d'étrier et le vissage de la seconde vis (11b) dans le second trou (14b) jusqu'à ce que la seconde tête de vis (12b) soit verrouillée contre la seconde contre-surface (15b).

16. Procédé de libération d'un cylindre de frein pneumatique (4) d'un étrier de frein (3) d'un frein à disque (1) pour un véhicule utilitaire, qui comprend le cylindre de frein (4), un disque de frein, l'étrier de frein (3), un dispositif d'application de frein (7) et des garnitures de frein (8), dans lequel l'étrier de frein (3) vient en prise sur le disque de frein et le dispositif d'application de frein (7), qui peut être actionné par le cylindre de frein (4), est agencé dans l'étrier de frein (3), au moyen duquel, pendant le freinage, les garnitures de frein (8) sont pressées des deux côtés contre le disque de frein, une tige de piston extensible et rétractable (6) du cylindre de frein (4) étant en prise avec le dispositif d'application de frein (7) et l'étrier de frein (3) étant fixé de manière amovible au cylindre de frein (4) au moyen d'un dispositif de fixation (2), dans lequel le dispositif de fixation (2) comprend au moins deux vis, une première vis (11a) et une seconde vis (11b), chacune présentant une tête de vis (12a, 12b), une tige de vis (13a, 13b) et un filetage externe formé sur la tige de vis (13a, 13b) et au moins deux alésages formés dans ou sur le cylindre de frein (4), un premier alésage (14a) et un second alésage (14b) présentant chacun un filetage interne, et au moins deux alésages traversants (26a, 26b) d'étrier, un premier alésage traversant (26a) d'étrier présentant une première contre-surface (15a) et un second alésage traversant (26b) d'étrier présentant une seconde contre-surface (15b), dans lequel la première vis (11a) fait saillie à travers le premier alésage traversant (26a) d'étrier et est vissée dans le premier alésage (14a) et dans lequel la seconde vis (11b) fait saillie à travers le second alésage traversant (26b) d'étrier et est vissée dans le second alésage (14b), au moyen d'au moins une goupille de centrage (30), comprenant au moins les étapes suivantes :
a1) le retrait de la première vis (11a) du premier alésage (14a) et du premier alésage traversant (26a) d'étrier, et
a2) le guidage de la goupille de centrage (30) dans le premier alésage traversant (26a) d'étrier de frein et dans le premier alésage (14a) de sorte que l'étrier de frein (3) et le cylindre de frein (4) soient ainsi centrés l'un par rapport à l'autre, et
a3) le retrait de la seconde vis (11b) du second alésage (14b) et du second alésage traversant (26b) d'étrier, et
a4) le retrait du cylindre de frein pneumatique (4) de l'étrier de frein (3) en déplaçant le cylindre de frein pneumatique (4) dans une direction parallèle à un axe de la goupille de centrage (30), et
a5) le retrait de la goupille de centrage (30) du premier alésage traversant (26a) d'étrier de frein et du premier alésage (14a), ou
b1) le retrait de la seconde vis (11b) du second alésage (14b) et du second alésage traversant (26b) d'étrier, et
b2) le guidage de la goupille de centrage (30) dans le second alésage traversant (26b) d'étrier de frein et dans le premier alésage (14b) de sorte que l'étrier de frein (3) et le cylindre de frein (4) soient ainsi centrés l'un par rapport à l'autre, et
b3) le retrait de la première vis (11a) du premier alésage (14a) et du premier alésage traversant (26a) d'étrier, et
b4) le retrait du cylindre de frein pneumatique (4) de l'étrier de frein (3) en déplaçant le cylindre de frein pneumatique (4) dans une direction parallèle à un axe de la goupille de centrage (30), et
b5) le retrait de la goupille de centrage (30) du second alésage traversant (26b) d'étrier de frein et du second alésage (14b).

17. Procédé de fixation du cylindre de frein (4) à l'étrier de frein (3) du frein à disque (1) selon au moins l'une des revendications 1 à 9, à l'aide d'un dispositif de centrage selon au moins l'une des revendications 10 à 13, comprenant au moins les étapes suivantes :
a) l'insertion du manchon (28a, 28b) fixé au cylindre de frein (4) et dépassant du cylindre de frein (4) dans l'alésage traversant (26a, 26b) d'étrier de frein, ou
b) l'insertion du manchon (28a, 28b) fixé à l'étrier de frein (3) et faisant saillie à partir de l'étrier de frein (3) dans l'alésage traversant (19a, 19b) de cylindre de frein, et
c) le vissage de la au moins une vis (11a, 11b) dans le au moins un alésage (14a, 14b).

18. Procédé de libération du cylindre de frein (4) de l'étrier de frein (3) du frein à disque (1) selon l'une quelconque des revendications 1 à 13, comprenant au moins les étapes suivantes :
a) l'application d'un outil de vissage sur la au moins une tête de vis (12a, 12b),
b) le dévissage de la au moins une vis (11a, 11b) de l'alésage (14a, 14b),
c) le retrait de la au moins une vis (11a, 11b),
d) la désolidarisation de la tige de piston (6) du cylindre de frein (4) à partir du dispositif d'application de frein (7) dans l'étrier de frein (3),
e) le retrait du cylindre de frein (4) de l'étrier (3) de frein à disque.
